# EUROPEAN PATENT APPLICATION

(11) **EP 4 707 753 A1**
(43) Date of publication of application: **11.03.2026**
(21) Application number: 25194618.2
(22) Date of filing: 07.08.2025
(51) Int. Cl.: G01F 15/14, G01F 15/18, G01F 1/00, G01F 15/00, G01F 1/66

(54) **FLUID MEASUREMENT DEVICE**

(30) Priority: 28.08.2024 JP 2024146589
(71) Applicant: Yokogawa Electric Corporation, Tokyo 180-8750 (JP)
(72) Inventor: HAYASHI, Yuichi, Musashino-shi, Tokyo, 180-8750, (JP); OKAMOTO, Kazutoshi, Musashino-shi, Tokyo, 180-8750, (JP); KIMURA, Soh, Musashino-shi, Tokyo, 180-8750, (JP); SUZUKI, Yuudai, Musashino-shi, Tokyo, 180-8750, (JP); UJIGAWA, Yuichi, Musashino-shi, Tokyo, 180-8750, (JP)
(74) Representative: Winter, Brandl - Partnerschaft mbB

(57) **Abstract**

A fluid measurement device includes a measurement tube through which a fluid flows, a measurement element that is provided at the measurement tube and that measures the fluid, a processing unit that processes a signal that has been measured by the measurement element, and a housing that includes a supporting portion that is formed in a cylindrical shape and that supports the measurement tube that is provided to pass through the supporting portion, and an accommodation portion that is formed in a cylindrical shape and that accommodates the processing unit, and in which the supporting portion and the accommodation portion are integrally formed by a metal material.

## Description

### BACKGROUND OF THE DISCLOSURE

### 1. Field of the Disclosure

The present disclosure relates to a fluid measurement device.

### 2. Description of the Related Art

As a fluid measurement device, a flow meter that measures a flow rate of, for example, a fluid is known. This type of flow meter includes a first housing that supports a measurement tube, through which the fluid flows, and a second housing that accommodates a processing unit, which processes a signal that has been measured by a measurement element provided at the measurement tube, and has a structure, in which the first housing and the second housing are coupled via a coupling portion, or a structure, in which the first housing and the second housing are welded.

Patent Document 1: U.S. Patent Application Publication 2015/0159811

A manufacturing process of the above described flow meter includes an assembly process of the coupling portion that couples the first housing to the second housing, a bonding process of welding the first housing to the second housing, so that there is a problem in that manufacturing cost of the flow meter increases.

Furthermore, the above described flow meter includes a coupling portion that is fixed with a screw or a welded portion, in which a welded trace has been formed, and, as a result of this, a large number of irregularities, such as gaps, disadvantageously occurs between the first housing and the second housing. In a case where these irregularities have occurred, there is a problem in that washability of an outer circumferential portion of the fluid meter decreases. In particular, in the flow meter applied to a fluid of a food product, a beverage, or the like, the entire flow meter has been washed in terms of food hygiene, and it is difficult to sufficiently remove dust of the fluid entering into the irregularities, so that washing work becomes complicated.

Accordingly, the disclosed technology has been conceived in light of the circumstances described above, and an object thereof is to provide a fluid measurement device capable of reducing manufacturing cost and suppressing an occurrence of irregularities in an outer circumferential portion of the fluid measurement device.

### SUMMARY OF THE DISCLOSURE

According to an aspect of the embodiments, a fluid measurement device comprising: a measurement tube through which a fluid flows; a measurement element that is provided at the measurement tube, and that measures the fluid; a processing unit that processes a signal, which has been measured by the measurement element; and a housing that includes a supporting portion that is formed in a cylindrical shape, and that supports the measurement tube, which is provided to pass through the supporting portion, and an accommodation portion that is formed in a cylindrical shape, and that accommodates the processing unit, and in which the supporting portion and the accommodation portion are integrally formed by a metal material.

### ADVANTAGEOUS EFFECTS OF DISCLOSURE

According to an aspect of one embodiment of the fluid measurement device disclosed in the present application, it is possible to reduce the manufacturing cost and prevent irregularities from occurring around the outer circumferential portion of the fluid measurement device.

### BRIEF DESCRIPTION OF THE DRAWINGS

FIG. 1 is a perspective view illustrating a fluid measurement device according to a first embodiment;
FIG. 2 is a cross sectional view schematically illustrating the fluid measurement device according to the first embodiment;
FIG. 3 is a cross sectional view schematically illustrating a first modification of the fluid measurement device according to the first embodiment;
FIG. 4 is a cross sectional view schematically illustrating a second modification of the fluid measurement device according to the first embodiment;
FIG. 5 is a cross sectional view schematically illustrating a third modification of the fluid measurement device according to the first embodiment;
FIG. 6 is a cross sectional view schematically illustrating a fourth modification of the fluid measurement device according to the first embodiment;
FIG. 7 is a perspective view illustrating a fluid measurement device according to a second embodiment;
FIG. 8 is a cross sectional view schematically illustrating the fluid measurement device according to the second embodiment;
FIG. 9 is a perspective view of a fluid measurement device according to the third embodiment illustrating by cutting out a part of a housing;
FIG. 10 is a cross sectional view schematically illustrating the fluid measurement device according to the third embodiment;
FIG. 11 is a cross sectional view schematically illustrating a first modification of the fluid measurement device according to the third embodiment;
FIG. 12 is a cross sectional view schematically illustrating a second modification of the fluid measurement device according to the third embodiment;
FIG. 13 is a cross sectional view schematically illustrating a third modification of the fluid measurement device according to the third embodiment;
FIG. 14 is a cross sectional view schematically illustrating a fluid measurement device according to a fourth embodiment; and
FIG. 15 is an enlarged cross sectional view for explaining a relevant part of the fluid measurement device according to the fourth embodiment.

### DETAILED DESCRIPTION OF THE PREFERRED EMBODIMENTS

Preferred embodiments of a fluid measurement device disclosed in the present application, will be explained in detail below with reference to the accompanying drawings. Furthermore, the fluid measurement device disclosed in the present application is not limited by the embodiments described below.

### First Embodiment

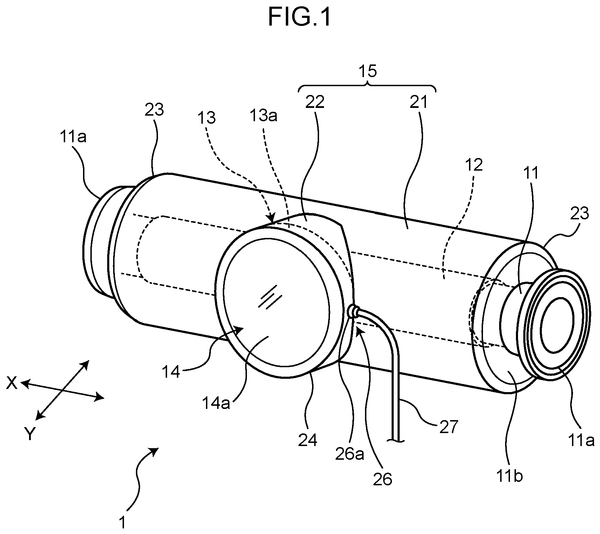

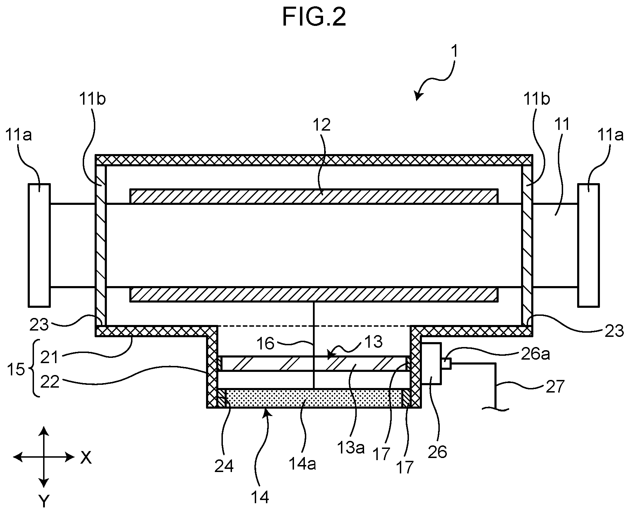

FIG. 1 is a perspective view illustrating a fluid measurement device according to a first embodiment. FIG. 2 is a cross sectional view schematically illustrating the fluid measurement device according to the first embodiment.

The fluid measurement device disclosed in the present application is applied to a flow meter that measures a flow rate of a fluid, but is not limited to the measurement of the flow rate, and may be applied to measurement of, for example, various kinds of physical properties of a temperature, a pressure, a viscosity, or the like of the fluid, or measurement of multiple types of physical properties, such as a flow rate and a temperature. In the fluid that is to be measured, a liquid, gas, slurry, or the like is included. In a case where the fluid measurement device is applied to the flow meter, the fluid measurement device is constituted as the flow meter having, for example, various kinds of detection types, such as an electromagnetic type, a vortex type, an ultrasonic type, the Coriolis type, or a thermal type.

As illustrated in FIG. 1 and FIG. 2, a fluid measurement device 1 according to the first embodiment includes a measurement tube 11 through which a fluid flows, a measurement element 12 that measures the fluid, a processing unit 13 that processes a signal, which is measured by the measurement element 12, a display unit 14 that displays a measurement result of the measurement, which is obtained by the measurement element 12, and a housing 15, which supports the measurement tube 11 and in which the measurement element 12, the processing unit 13, and the display unit 14 are provided.

The measurement tube 11 is formed by a metal material having corrosion resistance made of, for example, stainless steel, titanium, or the like. One set of first flange portions 11a is formed at both ends of the measurement tube 11, and each of the first flange portions 11a is connected to a pipe arrangement (not illustrated), through which the fluid flows in a facility that treats the fluid. Furthermore, in the measurement tube 11, one set of second flange portions 11b is formed adjacent to the respective first flange portions 11a, and is bonded to the housing 15.

The measurement element 12 is provided at the measurement tube 11, and may be, for example, attached to an outer circumferential surface of the measurement tube 11 so as to be non-contact with the fluid, or may be built into a part of the measurement tube 11 so as to come into contact with the fluid. The measurement element 12 according to the first embodiment is provided on the outer circumferential surface of the measurement tube 11 over a predetermined range in a length direction X of the measurement tube 11. The measurement element 12 is electrically connected to the processing unit 13.

The processing unit 13 includes a processing circuit 13a that is electrically connected to the measurement element 12 by wiring 16. The processing circuit 13a is formed on, for example, a printed circuit board, and an outer circumferential portion of the printed circuit board is fixed to the inner surface of an accommodation portion 22 of the housing 15 that will be described later, by using a bonding agent 17, a screw, or the like. Although not illustrated, a detection circuit that detects a signal, an arithmetic element that calculates a measurement value, a power supply circuit, and the like are included in the processing circuit 13a.

The display unit 14 includes a display panel 14a that displays various kinds of information or a warning, and the display panel 14a is electrically connected to the processing circuit 13a. The display panel 14a is fixed, by the bonding agent 17 or the like, so as to close a second opening 24 of the accommodation portion 22, which is provided in the housing 15 that will be described later. Although not illustrated, the display panel 14a may also include an operation button that is used to switch the content of displayed information or the like, that is used to set a measurement operation of the measurement element 12, or the like.

The housing 15 includes a supporting portion 21 that is formed in a cylindrical shape and that supports the measurement tube 11, and the accommodation portion 22 that is formed in a cylindrical shape and that accommodates the processing unit 13 and the display unit 14. In the housing 15, the supporting portion 21 and the accommodation portion 22 are integrally formed by a metal material. As a result of the supporting portion 21 and the accommodation portion 22 being integrally formed, as described above in the description of the related art, the coupling portion, which couples the plurality of housing and the welded portion, are able to be eliminated, so that it is possible to reduce the manufacturing cost needed for the fluid measurement device 1, and it is also possible to prevent irregularities from occurring around the outer circumferential surface of the housing 15. As a result of this, washability of the entirety of the fluid measurement device 1 is able to be improved, so that it is possible to easily perform hygiene management in a case where the present application is applied to the manufacturing process of, in particular, food products and medicine.

The housing 15 is formed of metal material made of, for example, stainless steel, aluminum, carbon steel, or the like, and is formed by using a hydroforming method. In the hydroforming method, the cylindrical tube, through which the measurement tube 11 passes, is attached to the interior of the molding die as a molding material. In the hydroforming method, the supporting portion 21 and the accommodation portion 22 are integrally formed by rolling a part of the outer circumferential portion of the cylindrical tube, by a pressure of the liquid that is filled in the cylindrical tube such that the subject part bulges toward outside in the radial direction of the cylindrical tube.

One set of first openings 23 each having a circular shape, is provided at both ends of the supporting portion 21, which is included in the housing 15. The measurement tube 11 is provided by passing through an interior portion space of the supporting portion 21 by way of each of the first openings 23, and each of the second flange portions 11b, which is provided at the measurement tube 11, is bonded to the inner circumference of each of the first openings 23 by welding. Moreover, an end surface wall (not illustrated), which extends from each of the first openings 23 to the inner side in the radial direction of the first opening 23, may be formed at both end portions of the housing 15 instead of the second flange portions 11b being provided in the measurement tube 11, and each of the end surface walls may also be bonded to the outer circumferential surface of the measurement tube 11 by welding.

The accommodation portion 22 included in the housing 15 bulges out in a radial direction Y of the measurement tube 11, which is supported by the supporting portion 21, and the second opening 24 having a circular shape is provided at one end of the accommodation portion 22. The second opening 24 functions as an accommodation port for accommodating the processing circuit 13a, which is provided in the processing unit 13, the wiring 16, and the like in the interior of the accommodation portion 22. The second opening 24 is formed by cutting the end portion of the bulged portion of the accommodation portion 22, in a case where the housing 15 has been formed by using the above described hydroforming method.

A terminal portion 26, which is electrically connected to the processing circuit 13a, is provided at the outer circumferential portion of the accommodation portion 22, which is included in the housing 15. The terminal portion 26 includes a connection terminal 26a, to which a distribution cable 27, such as a signal line that outputs a measurement result to the outside and a power supply line that supplies electrical power to the processing unit 13 and the measurement element 12, is detachably connected. Moreover, in the drawings, for the sake of convenience, only a single piece of the distribution cable 27 is illustrated, but a plurality of the connection terminals 26a, to which a plurality of the distribution cables 27 are respectively connected, may be provided side by side at the outer circumferential surface of the accommodation portion 22.

### Effect of the first embodiment

As described above, the fluid measurement device 1 according to the first embodiment includes the housing 15 that includes the supporting portion 21 that is formed in the cylindrical shape and that supports the measurement tube 11, which is provided to pass through the supporting portion 21, and the accommodation portion 22 that is formed in the cylindrical shape and that accommodates the processing unit 13, and in which the supporting portion 21 and the accommodation portion 22 are integrally formed by a metal material. As a result of this, it is possible to eliminate the coupling portion that couples the plurality of housings and the welded portion, so that it is possible to reduce the manufacturing cost needed for the fluid measurement device 1, and it is also possible to prevent irregularities from occurring around the outer circumferential surface of the housing 15. As a result of this, the fluid measurement device 1 is able to improve the washability of the entire device, so that the fluid measurement device 1 is particularly effective when applied to manufacturing processes of beverages, food products, pharmaceutical medicine, and the like.

### First modification of the first embodiment

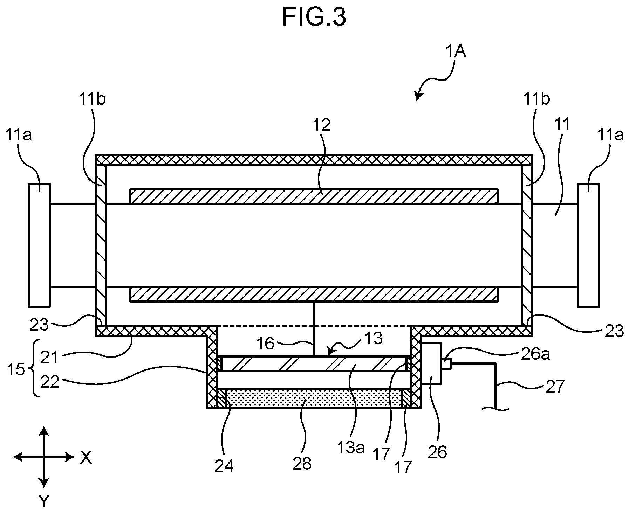

FIG. 3 is a cross sectional view schematically illustrating a first modification of the fluid measurement device 1 according to the first embodiment. As illustrated in FIG. 3, a fluid measurement device 1A according to the first modification includes, instead of the display unit 14, a lid member 28 that is provided so as to close the second opening 24 of the accommodation portion 22 included in the housing 15. The lid member 28 is fixed by the bonding agent 17 or the like so as to close the second opening 24.

With the fluid measurement device 1A according to the first modification of the first embodiment, by eliminating the display unit 14 provided in the fluid measurement device 1, it is possible to reduce the manufacturing cost and provide the fluid measurement device 1A at a low price. Similarly to the fluid measurement device 1, in also the fluid measurement device 1A according to the first modification, by providing the housing 15, it is possible to prevent irregularities from occurring around the outer circumferential portion of the fluid measurement device 1A, so that it is possible to improve the washability of the entire device.

### Second modification of the first embodiment

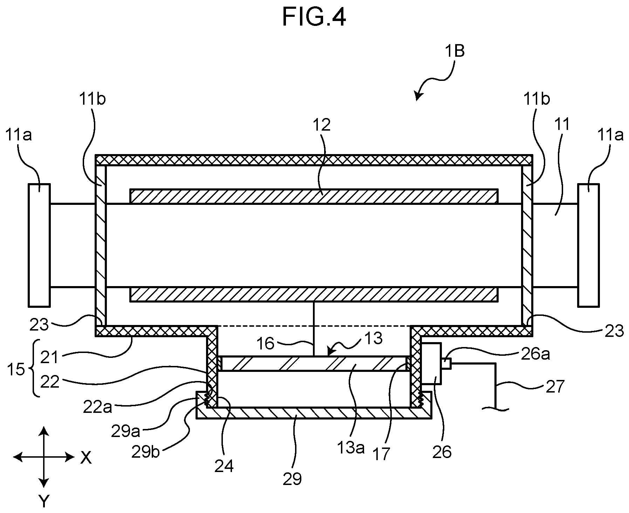

FIG. 4 is a cross sectional view schematically illustrating a second modification of the fluid measurement device 1 according to the first embodiment. As illustrated in FIG. 4, similarly to the first modification, a fluid measurement device 1B according to the second modification includes, instead of the display unit 14, a lid member 29 that is provided to close the second opening 24 of the accommodation portion 22, which is included in the housing 15.

The lid member 29 is detachably provided at the second opening 24 of the accommodation portion 22. The lid member 29 includes a cylindrical portion 29a that covers the outer side of the second opening 24, which is provided at, for example, the accommodation portion 22, and a threaded portion 29b, which is engaged with the outer circumferential side of the second opening 24 that is provided at the accommodation portion 22, is provided at the inner circumferential surface of the cylindrical portion 29a. A threaded portion 22a, which is engaged with the threaded portion 29b that is included in the lid member 29, is formed on the outer side of the second opening 24, which is provided at the outer circumferential surface of the accommodation portion 22. As a result of this, the lid member 29 is able to easily open and close the second opening 24. Moreover, although not illustrated, a threaded portion, which is inserted in the inner side of the second opening 24 and is engaged with the inner circumferential surface of the accommodation portion 22, may be provided in the lid member 29.

With the fluid measurement device 1B according to the second modification of the first embodiment, as a result of the lid member 29 being detachably provided at the second opening 24 of the accommodation portion 22, it is possible to ensure the maintainability of the processing unit 13, the wiring 16, and the like accommodated in the accommodation portion 22, and it is thus possible to easily perform maintenance work in the interior of the accommodation portion 22. Furthermore, similarly to the first modification, in also the fluid measurement device 1B according to the second modification, by eliminating the display unit 14, it is possible to reduce the manufacturing cost and provide the fluid measurement device 1B at a low price, and, similarly to the fluid measurement device 1, by providing the housing 15, it is possible to prevent irregularities from occurring around the outer circumferential portion of the fluid measurement device 1B, so that it is possible to improve the washability of the entire device.

### Third modification of the first embodiment

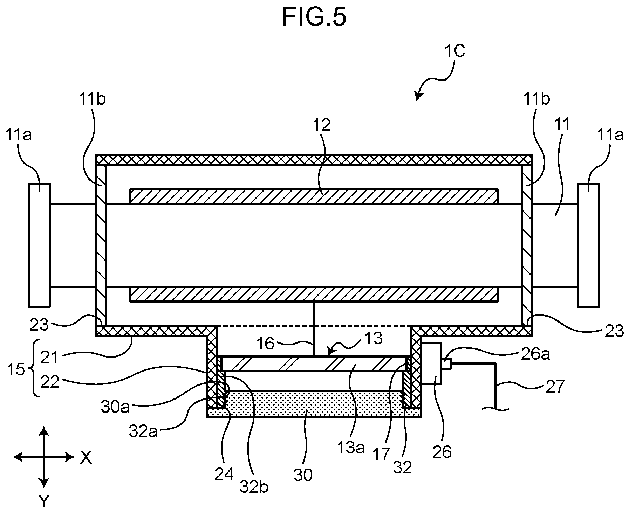

FIG. 5 is a cross sectional view schematically illustrating a third modification of the fluid measurement device 1 according to the first embodiment. As illustrated in FIG. 5, similarly to the second modification, a fluid measurement device 1C according to the third modification includes a lid member 30 that is detachably provided at the second opening 24 of the accommodation portion 22, which is included in the housing 15.

An attachment member 32, to which the lid member 30 is attached, is provided on the inner circumferential surface of the second opening 24. The attachment member 32 is formed to have a ring shape by using, for example, a resin material, and is bonded to the housing 15. For example, in a case where the housing 15 is formed by injection molding, the attachment member 32 may be formed in the housing 15 by insert molding.

A threaded portion 32a, to which the lid member 30 is detachably attached, is provided on the inner circumferential surface of the attachment member 32. Furthermore, the attachment member 32 includes a holding portion 32b that holds the processing circuit 13a, which is included in the processing unit 13 that has been accommodated in the accommodation portion 22. The holding portion 32b is formed in contact with the printed circuit board, on which the processing circuit 13a is formed, so that stability of the fixed state of the processing circuit 13a, which is accommodated in the accommodation portion 22, is enhanced. In addition, as a result of the processing circuit 13a being held by the holding portion 32b, as compared with a case of a structure in which, for example, the processing circuit 13a is screwed from the outer side of the housing 15, it is possible to prevent irregularities from occurring around the outer circumferential surface of the housing 15, so that it is possible to improve the washability of the entirety of the fluid measurement device 1C.

Although not illustrated, the holding portion 32b, which is included in the attachment member 32, may include an engaging claw that is engaged with, for example, the printed circuit board, on which the processing circuit 13a is formed, and, as a result of this, the printed circuit board is able to be easily fixed to the holding portion 32b. Furthermore, a threaded portion 30a, which is engaged with the threaded portion 32a that is formed at the attachment member 32, is formed at the outer circumferential portion of the lid member 30. As a result of this, the lid member 30 is easily open and close the second opening 24.

With the fluid measurement device 1C according to the third modification of the first embodiment, similarly to the second modification, as a result of the lid member 30 being detachably attached to the attachment member 32 that is provided at the second opening 24 of the accommodation portion 22, it is possible to ensure the maintainability of the processing unit 13, the wiring 16, and the like accommodated in the accommodation portion 22, and it is thus possible to easily perform maintenance work in the interior of the accommodation portion 22. Furthermore, in the fluid measurement device 1C according to the third modification, as a result of the holding portion 32b being formed on the attachment member 32, the stability of the fixed state of the processing unit 13 is enhanced, and it is possible to easily fix the processing unit 13 to the holding portion 32b. Furthermore, as a result of the attachment member 32 being formed by using the resin material, it is possible to easily form the threaded portion 32a at the attachment member 32.

Furthermore, similarly to the first and the second modifications, in also the fluid measurement device 1C according to the third modification, by eliminating the display unit 14, it is possible to reduce the manufacturing cost and provide the fluid measurement device 1C at a low price, and, similarly to the fluid measurement device 1, by providing the housing 15, it is possible to prevent irregularities from occurring around the outer circumferential portion of the fluid measurement device 1C, so that it is possible to improve the washability of the entire device.

### Fourth modification of the first embodiment

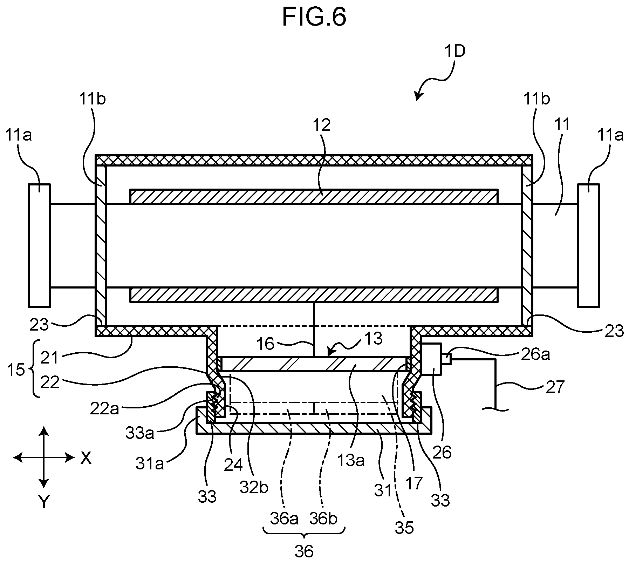

FIG. 6 is a cross sectional view schematically illustrating the fluid measurement device 1 of the first embodiment according to the fourth modification. As illustrated in FIG. 6, similarly to the second and the third modifications, a fluid measurement device 1D according to the fourth modification includes a lid member 31 that is detachably provided at the second opening 24 of the accommodation portion 22, which is included in the housing 15.

The lid member 31 includes a cylindrical portion 31a, which covers the outer side of the second opening 24 that is provided in the accommodation portion 22, and an attachment member 33, which is detachably attached to the second opening 24 that is provided in the accommodation portion 22, is provided on the inner circumferential surface of the cylindrical portion 31a. The attachment member 33 is formed to have a ring shape by a resin material, and is bonded to the lid member 31. For example, in a case where the lid member 31 is formed by injection molding, the attachment member 33 may be formed at the lid member 31 by insert molding.

A threaded portion 33a, which is engaged with the outer circumferential side of the second opening 24 that is provided in the accommodation portion 22, is provided on the inner circumferential surface of the attachment member 33. The threaded portion 22a, which is engaged with the threaded portion 33a of the attachment member 33 that is bonded to the lid member 31, is formed on the outer side of the second opening 24, which is provided at the outer circumferential surface of the accommodation portion 22. As a result of this, the lid member 31 is able to easily open and close the second opening 24.

With the fluid measurement device 1D according to the fourth modification of the first embodiment, similarly to the second and the third modifications, as a result of the lid member 30 being detachably provided at the second opening 24 of the accommodation portion 22, it is possible to ensure the maintainability of the processing unit 13, the wiring 16, and the like accommodated in the accommodation portion 22, and it is thus possible to easily perform maintenance work in the interior of the accommodation portion 22. Furthermore, in the fluid measurement device 1D according to the fourth modification, as a result of the attachment member 33, provided at the lid member 31, being formed by using the resin material, it is possible to easily form the threaded portion 33a of the attachment member 33.

Furthermore, similarly to the first to the third modifications, in also the fluid measurement device 1D according to the fourth modification, by eliminating the display unit 14, it is possible to reduce the manufacturing cost and provide the fluid measurement device 1D at a low price, and, similarly to the fluid measurement device 1, by providing the housing 15, it is possible to prevent irregularities from occurring around the outer circumferential portion of the fluid measurement device 1D, so that it is possible to improve the washability of the entire device.

Moreover, in the second to the fourth modifications according to the first embodiment, each of the lid members 29 to 31 is detachably provided at the second opening 24 of the accommodation portion 22, but the display panel 14a, which is included in the display unit 14, may be detachably provided at the second opening 24.

Furthermore, in the fluid measurement device 1 according to the first embodiment and according to each of the first to the fourth modifications, as one example, as illustrated in FIG. 6, at the accommodation portion 22, which is included in the housing 15, a battery 35, which supplies electrical power to the processing circuit 13a, included in the processing unit 13, and to the measurement element 12, and a communication unit 36, which performs wireless communication with a control device or the like that is provided outside the housing 15, may be provided. The communication unit 36 is electrically connected to the battery 35 and the processing circuit 13a, and includes a communication circuit 36a, and a communication antenna 36b that is electrically connected to the communication circuit 36a. At the accommodation portion 22, only one of the battery 35 and the communication unit 36 may be provided.

As described above, as a result of the fluid measurement device 1 including the battery 35 and the communication unit 36, it is possible to eliminate the terminal portion 26 and the distribution cable 27, which are provided in the housing 15, and, in particular, it is possible to prevent irregularities from occurring around the outer circumferential surface of the housing 15, so that it is possible to further improve the washability and workability of washing of the entirety of the fluid measurement device 1.

In the following, the other embodiments will be described with reference to the drawings. In the other embodiment, for the sake of convenience, a portion having the same function as that described in the first embodiment, and the same components as that described in the first embodiment, are denoted by the same reference numerals as those used in the first embodiment, and descriptions thereof will be omitted.

### Second Embodiment

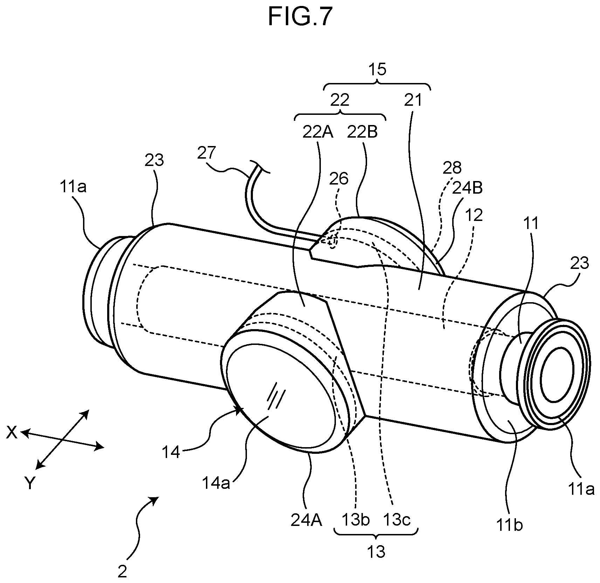

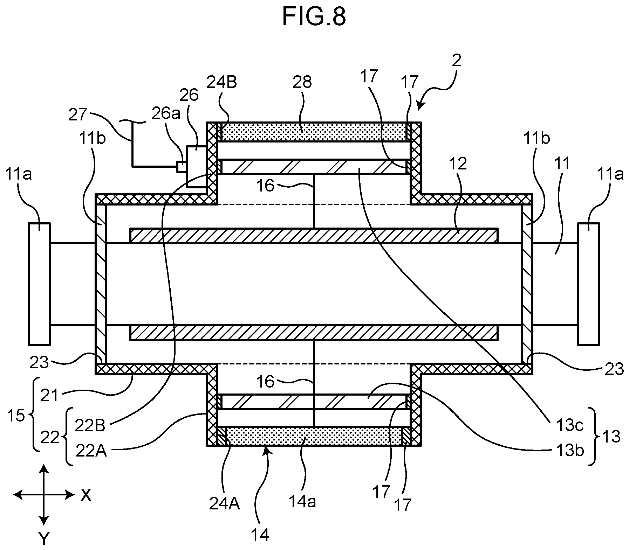

FIG. 7 is a perspective view illustrating a fluid measurement device according to a second embodiment. FIG. 8 is a cross sectional view schematically illustrating the fluid measurement device according to the second embodiment. The second embodiment is different from the first embodiment in that the housing 15 includes a plurality of accommodation portions.

As illustrated in FIG. 7 and FIG. 8, a fluid measurement device 2 according to the second embodiment includes the housing 15 that is integrally formed with the supporting portion 21 and the accommodation portion 22 by using a metal material. The processing unit 13 according to the second embodiment includes a detection circuit 13b that detects a signal, which is measured by the measurement element 12, and a power supply circuit 13c that supplies electrical power to the detection circuit 13b. The detection circuit 13b and the power supply circuit 13c are included in the processing circuit 13a, which is provided in the processing unit 13. The detection circuit 13b and the power supply circuit 13c are electrically connected to the measurement element 12 by the wiring 16. The accommodation portion 22 according to the second embodiment includes a first accommodation portion 22A that accommodates the detection circuit 13b, and a second accommodation portion 22B that accommodates the power supply circuit 13c.

In the first accommodation portion 22A, a second opening 24A, having a circular shape, is provided one end of the first accommodation portion 22A. The second opening 24A functions as an accommodation port for accommodating the detection circuit 13b, the wiring 16, and the like in the interior of the first accommodation portion 22A. In the second accommodation portion 22B, a second opening 24B, having a circular shape, is provided at one end of the second accommodation portion 22B. The second opening 24B functions as an accommodation port for accommodating the power supply circuit 13c, the wiring 16, and the like in the interior of the second accommodation portion 22B. The first accommodation portion 22A and the second accommodation portion 22B are formed at positions facing each other across the supporting portion 21 in the radial direction Y of the measurement tube 11 (in a radial direction of the supporting portion 21). Similarly to the first embodiment, the housing 15 according to the second embodiment is also formed by using, for example, the hydroforming method.

As described above, as a result of the housing 15 including the first accommodation portion 22A and the second accommodation portion 22B as the accommodation portion 22, it is possible to reduce the size of each of the first accommodation portion 22A and the second accommodation portion 22B, that is, it is possible to reduce a bulge amount of the supporting portion 21 from the outer circumferential surface of the supporting portion 21. As a result of this, in a case where the housing 15 is formed by using the hydroforming method or the like, it is possible to prevent a molding defect, such as a crack, from occurring in the first accommodation portion 22A and the second accommodation portion 22B, appropriately ensure the moldability of the housing 15, and ensure a large volume capable of accommodating the processing unit 13 in the housing 15.

A printed circuit board, on which the detection circuit 13b is formed, is fixed to the first accommodation portion 22A by the bonding agent 17 or the like. The display unit 14 is provided in the first accommodation portion 22A such that the display unit 14 closes the second opening 24A. The outer circumference of the display panel 14a of the display unit 14 is fixed to the second opening 24A, by the bonding agent 17 or the like. The printed circuit board, on which the power supply circuit 13c has been formed, is fixed to the second accommodation portion 22B, by the bonding agent 17 or the like. The lid member 28 is provided in the second accommodation portion 22B such that the lid member 28 closes the second opening 24B. The outer circumference of the lid member 28 is fixed to the second opening 24B by the bonding agent 17 or the like. The terminal portion 26, which is electrically connected to the detection circuit 13b and the power supply circuit 13c, is provided at the outer circumferential portion of the second accommodation portion 22B.

Moreover, although not illustrated, the first accommodation portion 22A and the second accommodation portion 22B may be arranged side by side in a length direction X of the measurement tube 11 (the length direction of the supporting portion 21). The number of the accommodation portions, included in the housing 15, is not limited, and three or more accommodation portions may also be provided. In also the second embodiment, the configuration may be constituted in combination with the first to the fourth modifications according to the first embodiment described above, and the same effect as that of each of the first to the fourth modifications according to the first embodiment, is obtained.

### Effect of the second embodiment

As described above, in the fluid measurement device 2 according to the second embodiment, the size of each of the first accommodation portion 22A and the second accommodation portion 22B, can be reduced as a result of the housing 15 including the first accommodation portion 22A and the second accommodation portion 22B. Consequently, with the fluid measurement device 2, when the housing 15 is molded, it is possible to prevent a molding defect, such as a crack, from occurring in the first accommodation portion 22A and the second accommodation portion 22B, appropriately ensure the moldability of the housing 15, and ensure a large volume capable of accommodating the processing unit 13 in the housing 15. Furthermore, in also the fluid measurement device 2, similarly to the first embodiment, by providing the housing 15, it is possible to prevent irregularities from occurring around the outer circumferential portion of the fluid measurement device 2, so that it is possible to improve the washability of the entire device.

### Third Embodiment

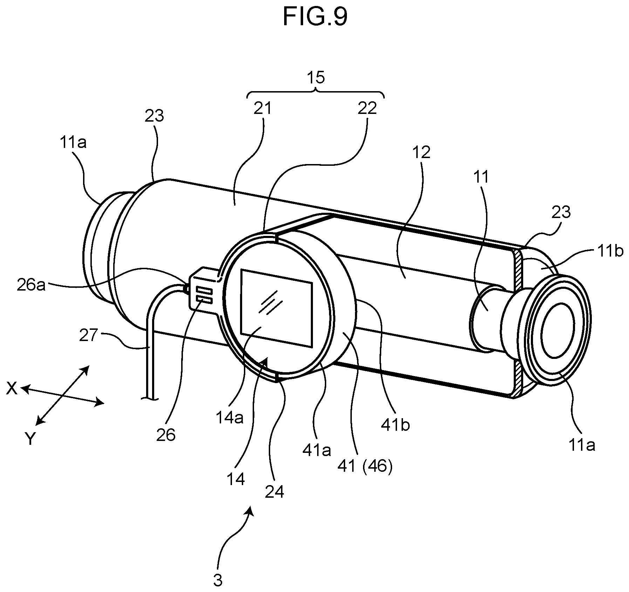

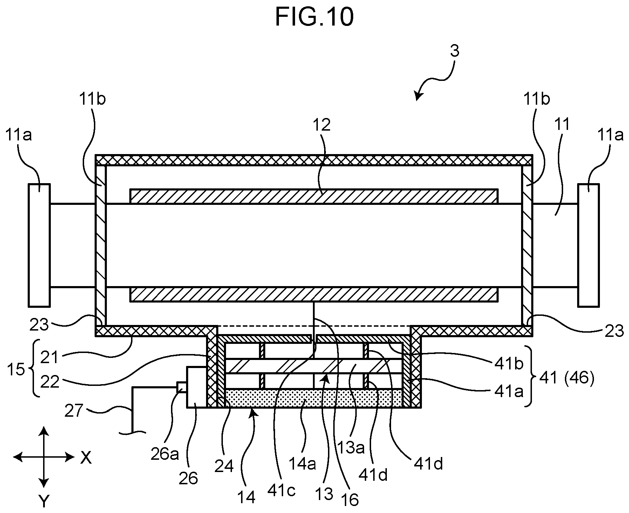

FIG. 9 is a perspective view of a fluid measurement device according to a third embodiment illustrating cutting out a part of the housing 15. FIG. 10 is a cross sectional view schematically illustrating the fluid measurement device according to the third embodiment. The third embodiment is different from the first and the second embodiments in that a thermal insulation member is provided in the housing 15.

As illustrated in FIG. 9 and FIG. 10, in a fluid measurement device 3 according to the third embodiment, a thermal insulation container 41, which functions as a thermal insulation member that interrupts conduction of heat of the fluid transferred from the measurement tube 11 to the processing unit 13, is provided in the interior portion of the housing 15. The thermal insulation container 41 is formed by a resin material having thermal insulation properties, and includes a cylindrical portion 41a and a bottom portion 41b. For example, glass fibers may be mixed with the resin material, which forms the thermal insulation container 41.

The thermal insulation container 41 is constituted such that the bottom portion 41b is arranged at a position between the accommodation portion 22 and the supporting portion 21, and the outer circumferential surface of the cylindrical portion 41a is fixed to the inner circumferential surface of the accommodation portion 22 by a bonding agent (not illustrated), or the like. As illustrated in FIG. 10, the processing circuit 13a, included in the processing unit 13, and the display unit 14 are accommodated in the interior portion of the cylindrical portion 41a of the thermal insulation container 41. A through hole 41c, through which the wiring 16 that electrically connects the measurement element 12 and the processing unit 13, is included at the bottom portion 41b of the thermal insulation container 41, and the through hole 41c is sealed by a sealing member (not illustrated).

Furthermore, the thermal insulation container 41 includes holding portions 41d that hold the printed circuit board, on which the processing circuit 13a is formed, and that are disposed between the processing circuit 13a and the inner surface of the bottom portion 41b of the thermal insulation container 41 with an air gap. For example, the holding portions 41d are formed on the inner surface of the cylindrical portion 41a, and printed circuit board, on which the processing circuit 13a is formed, is held by and inserted in a groove, which is formed in each of the holding portions 41d. As described above, the thermal insulation container 41 holds the processing circuit 13a by the holding portions 41d, so that the stability of the fixed state of the processing circuit 13a, which is accommodated in the accommodation portion 22, is increased. In addition, the air gap, which is provided between the bottom portion 41b of the thermal insulation container 41 and the processing circuit 13a, functions as a thermal insulation space that interrupts heat transferred from the measurement tube 11, so that thermal insulation properties are enhanced.

Furthermore, one end of each of the holding portions 41d is brought into contact with the display panel 14a with the air gap between the printed circuit board, on which the processing circuit 13a is formed, and the display panel 14a of the display unit 14, and the display panel 14a is held by the holding portions 41d. Moreover, in a case where the processing unit 13 and the display unit 14 are constituted as an integrated module, the thermal insulation container 41 may be used as a case that holds this module, so that it is possible to improve assembly workability of the fluid measurement device 3.

In general, the upper limit of a heat resistant temperature of the printed circuit board, on which the processing circuit 13a included in the processing unit 13 is formed, and the display panel 14a of the display unit 14, is about 70 [°C] to 100 [°C]. For this reason, as in the present embodiment, with the structure in which the measurement tube 11, the processing unit 13, and the display unit 14 are accommodated in the housing 15, there is a need to limit the upper limit of the temperature of the fluid, flowing through the measurement tube 11, to a temperature equal to or less than 70 [°C] to 100 [°C] in consideration of conduction of the heat of the fluid, which is transferred from the measurement tube 11. As described in the third embodiment, by providing the thermal insulation container 41, the thermal insulation properties of the processing unit 13 and the display unit 14 is ensured, so that it is possible to increase the upper limit of the temperature of the fluid to be handled to about 150 [°C]. As a result of this, the fluid measurement device 3 according to the third embodiment, is able to be applied to the measurement of steam as a fluid.

Although not illustrated, in the fluid measurement device 3, in a case where the lid member 28 (see FIG. 4 or the like) is included instead of, for example, the display unit 14, as a result of the lid member 28 being formed by a resin material having a heat resistance, the air gap, which is provided between the processing circuit 13a and the lid member 28 that are held by the holding portion 41d, provided in the thermal insulation container 41 described above, functions as the thermal insulation space, which interrupts heat transferred from the outside of the housing 15 to the processing unit 13, so that the thermal insulation properties are enhanced. As a result of this, this makes it possible to wash the entirety of the fluid measurement device 3 by using steam at a temperature equal to or greater than, for example, 100 [°C], and the fluid measurement device 3 is applicable to a Cleaning In Place (CIP) method performed in a manufacturing process of manufacturing food products or the like, so that it is possible to more widely use the fluid measurement device 3.

### Effect of the third embodiment

As described above, with the fluid measurement device 3 according to the third embodiment, as a result of the thermal insulation container 41 being provided in the interior portion of the accommodation portion 22 of the housing 15, it is possible to ensure the thermal insulation properties of the processing unit 13 and the display unit 14, and perform measurement of the fluid at the temperature of about 150 [°C]. Furthermore, in also the fluid measurement device 3, similarly to the first and the second embodiments, by providing the housing 15, it is possible to prevent irregularities from occurring around the outer circumferential portion of the fluid measurement device 3, so that it is possible to improve the washability of the entire device.

The fluid measurement device 3 according to the third embodiment may include, instead of the thermal insulation container 41, an electromagnetic shield container 46 (see FIG. 10 or the like) functioning as an electromagnetic shield member that interrupts transmission of electromagnetic waves, emitted by the measurement element 12, transmitted to the processing circuit 13a that is included in the processing unit 13. For example, the electromagnetic shield container 46 is formed to have the same configuration as that of the thermal insulation container 41. In the fluid measurement device 3, as a result of the electromagnetic shield container 46 being provided in the interior portion of the accommodation portion 22 that is included in the housing 15, in a case where a flow rate sensor operated by using a detection method, such as an electromagnetic method or the Coriolis method, is particularly used for the measurement element 12, it is possible to prevent the processing circuit 13a, included in the processing unit 13, and the wiring 16, from being affected by the electromagnetic waves, which is emitted by the measurement element 12. As a result of this, the stability of the processing operation, performed by the processing unit 13, is enhanced. Moreover, the fluid measurement device 3 may include both of the thermal insulation member and the electromagnetic shield member.

### First modification of the third embodiment

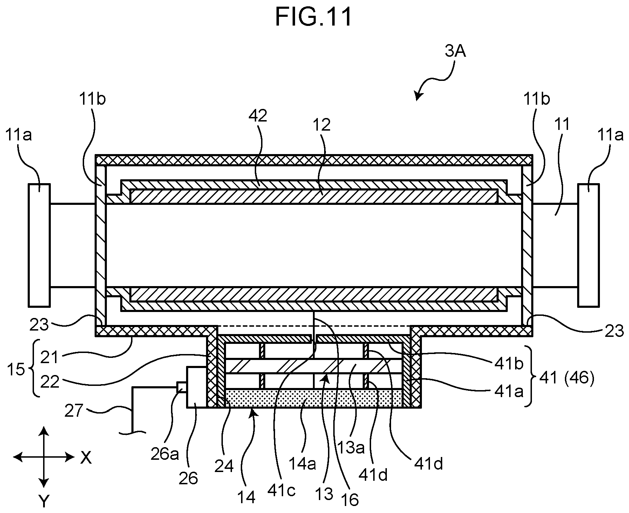

FIG. 11 is a cross sectional view schematically illustrating a first modification of the fluid measurement device 3 according to the third embodiment. As illustrated in FIG. 11, a fluid measurement device 3A according to the first modification includes, in addition to the thermal insulation container 41 described above, a thermal insulation cover 42 that functions as a thermal insulation member and that is arranged so as to cover the outer circumference of the measurement tube 11 and the measurement element 12. The thermal insulation cover 42 is formed by a flexible sheet material made of, for example, glass wool, and is fixed to the outer circumferential surface of the measurement tube 11 by a bonding agent (not illustrated) or the like. The wiring 16, which electrically connects the measurement element 12 and the processing circuit 13a, passes through the thermal insulation cover 42, and is then drawn.

The fluid measurement device 3A according to the first modification of the third embodiment includes the thermal insulation container 41 that covers the processing unit 13 and the display unit 14, and the thermal insulation cover 42 that covers the measurement tube 11 and the measurement element 12, so that the fluid measurement device 3A is able to further increase the thermal insulation properties of the processing unit 13 and the display unit 14. Furthermore, in also the fluid measurement device 3A, similarly to the first to the third embodiments, by providing the housing 15, it is possible to prevent irregularities from occurring around the outer circumferential portion of the fluid measurement device 3A, so that it is possible to improve the washability of the entire device.

Moreover, in the fluid measurement device 3A, instead of the thermal insulation cover 42, for example, an electromagnetic cover that functions as an electromagnetic shield member and that covers the measurement element 12, may be provided. In this case, it is possible to ensure both of the thermal insulation properties and the electromagnetic shielding properties.

### Second modification of the third embodiment

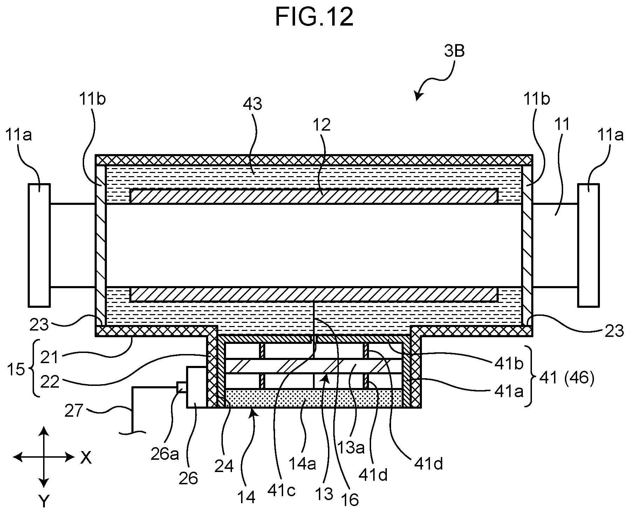

FIG. 12 is a cross sectional view schematically illustrating a second modification of the fluid measurement device 3 according to the third embodiment. As illustrated in FIG. 12, a fluid measurement device 3B according to the second modification includes, in addition to the thermal insulation container 41 described above, a filling material 43 that functions as a thermal insulation member and that is filled in the interior portion of the supporting portion 21 so as to cover the outer circumference of the measurement tube 11 and the measurement element 12. As the filling material 43, for example, a potting material, such as a urethane resin, having the thermal insulation properties, is used.

The fluid measurement device 3B according to the second modification of the third embodiment includes the thermal insulation container 41 that covers the processing unit 13 and the display unit 14, and the filling material 43 that covers the measurement tube 11 and the measurement element 12, so that the fluid measurement device 3B is able to further increase the thermal insulation properties of the processing unit 13 and the display unit 14. Furthermore, in also the fluid measurement device 3B, similarly to the first to the third embodiments, by providing the housing 15, it is possible to prevent irregularities from occurring around the outer circumferential portion of the fluid measurement device 3B, so that it is possible to improve the washability of the entire device.

### Third modification of the third embodiment

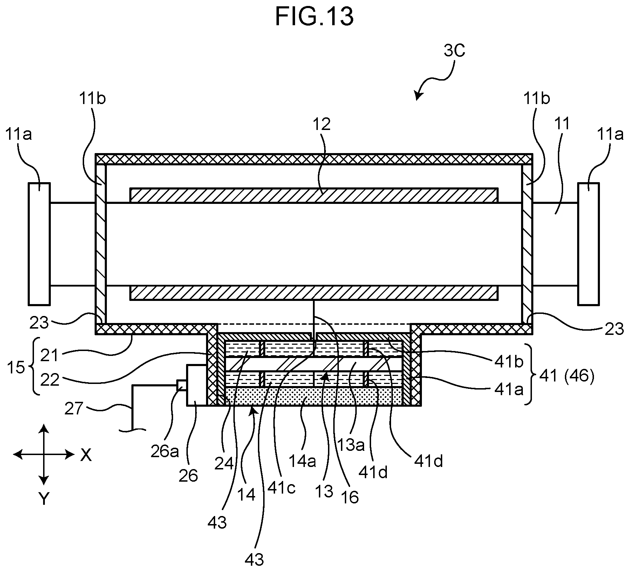

FIG. 13 is a cross sectional view schematically illustrating a third modification of the fluid measurement device 3 according to the third embodiment. As illustrated in FIG. 13, a fluid measurement device 3C according to the third modification includes, in addition to the thermal insulation container 41 described above, the filling material 43 that is filled so as to cover the entirety of the processing unit 13, which is accommodated in the thermal insulation container 41. As a result of the filling material 43 is filled in the interior portion of the accommodation portion 22, specifically, is filled in the interior portion of the thermal insulation container 41, the filling material 43 covers the printed circuit board, on which the processing circuit 13a is formed, and the wiring 16.

In the fluid measurement device 3C according to the third modification of the third embodiment, the processing unit 13 and the display unit 14 are covered by the thermal insulation container 41 and the filling material 43, so that the fluid measurement device 3C is able to further increase the thermal insulation properties of the processing unit 13 and the display unit 14. Furthermore, in also the fluid measurement device 3C, similarly to the first to the third embodiments, by providing the housing 15, it is possible to prevent irregularities from occurring around the outer circumferential portion of the fluid measurement device 3C, so that it is possible to improve the washability of the entire device.

Moreover, the fluid measurement device 3 may be constituted such that the thermal insulation container 41 is eliminated, and the interior portion of the accommodation portion 22 is filled by only the filling material 43.

### Fourth Embodiment

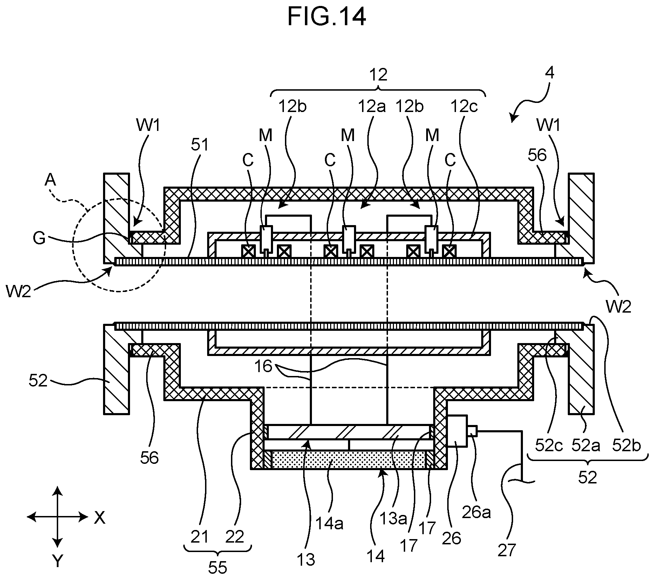

FIG. 14 is a cross sectional view schematically illustrating a fluid measurement device according to the fourth embodiment. The fourth embodiment is different from the first to the third embodiments in that the supporting structure constituted such that the supporting portion 21, which is included in the housing, supports the measurement tube 11, is different from the supporting structure described above in the first to the third embodiments.

As illustrated in FIG. 14, a housing 55 provided in a fluid measurement device 4 according to the fourth embodiment includes, similarly to the housing 15 described above in the first to the third embodiments, the supporting portion 21 that is formed in a cylindrical shape and that supports a measurement tube 51, and the accommodation portion 22 that is formed in a cylindrical shape and that accommodates the processing unit 13 and the display unit 14.

As the measurement tube 51 according to the fourth embodiment, for example, a straight tube formed by a metal material, such as austenitic stainless steel or titanium, having corrosion resistance, or a straight tube formed by coating a fluorine-based resin material, such as Perfluoro alkoxy alkane (PFA) or Polytetrafluoroethylene (PTFE), on the metal tube, is used.

Flange members 52 are provided on both ends of the measurement tube 51. Each of the flange members 52 is formed by a metal material, and includes a base portion 52a that is formed in a disk shape, a center hole 52b that is connected to a channel of the measurement tube 51, and a projection portion 52c, which is formed in a ring shape and to which the end portion of the measurement tube 51 and the end portion of the housing 55 are connected.

The measurement element 12 is an element group provided by a typical Coriolis method flow meter, and includes a vibration portion 12a that sends vibrations to the measurement tube 51, one set of detection units 12b that is arranged on the upstream side and the downstream side of the channel of the measurement tube 51 with respect to the vibration portion 12a, and an attachment pipe 12c that is used to attach the vibration portion 12a and the one set of the detection units 12b to the measurement tube 51. Each of the vibration portion 12a and the one set of the detection units 12b includes a magnet M that is coupled to the outer circumferential surface of the measurement tube 51, and a coil C that is arranged on both sides of the magnet M on the outer circumferential surface of the measurement tube 51. Both ends of the attachment pipe 12c is fixed to the outer circumferential surface of the measurement tube 51, and is provided so as to accommodate each of the coils C in the interior portion. The magnet M, which is coupled to the outer circumferential surface of the measurement tube 51, is supported by the outer circumferential portion of the attachment pipe 12c. Each of the detection units 12b is electrically connected to the processing circuit 13a, which is included in the processing unit 13, via the wiring 16. Moreover, the measurement element 12 generates electromagnetic waves, so that it is preferable that the fluid measurement device 4 is constituted to have a structure, in which the above described electromagnetic shield member (the electromagnetic shield container 46, etc.) is included.

With the Coriolis method flow meter provided as the measurement element 12, by causing the measurement tube 51 to vibrate by the vibration portion 12a, the phase of the torsional vibration, which is generated by the Coriolis force in the fluid flowing through the measurement tube 51, is detected by the one set of the detection units 12b, and a mass flow rate is measured on the basis of the phase difference, which is detected by each of the detection units 12b. Furthermore, with the measurement element 12, it is possible to calculate a density of the fluid on the basis of a resonance frequency of the measurement tube 51, which is vibrated by the vibration portion 12a.

### Welded portion according to the fourth embodiment

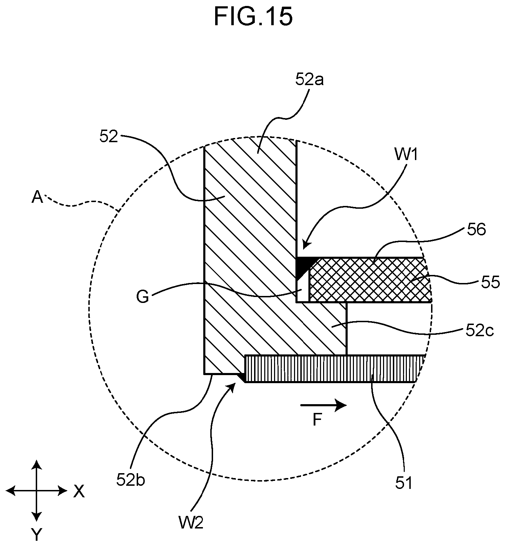

FIG. 15 is an enlarged cross sectional view for explaining the relevant part of the fluid measurement device 4 according to the fourth embodiment. FIG. 15 illustrates a portion A, enclosed by the broken lines illustrated in FIG. 14.

As illustrated in FIG. 14 and FIG. 15, the housing 55 includes a connection portion 56 that is formed in a cylindrical shape and that is formed such that the both end portions of the supporting portion 21 are formed to have a small inner diameter. The connection portion 56, which is included in the housing55, is constituted such that the inner circumferential surface of the connection portion 56 is in contact with the outer circumferential surface of each of the projection portions 52c of the respective flange members 52, and a first welded portion W1 is formed by being subjected to butt welding, joined with each of the base portions 52a, such that a predetermined gap G is generated between the end surface of each of the connection portions 56 and the base portions 52a. In other words, the housing 55 is constituted such that the external dimensions have been set to generate the gap G. As a result of the first welded portion W1 being formed while generating the gap G in this way, the force, which reduces the size of the gap G, is generated by each of the first welded portions W1, so that the force, which pulls each of the projection portions 52c, included in the respective flange members 52, to the housing 55 side, is generated. The first welded portion W1 is formed on both ends of the measurement tube 51 in the length direction X.

Each of the both ends of the measurement tube 51 abuts against a step portion that is formed at the opening edge of each of the center holes 52b, provided on the respective projection portion 52c sides of the flange members 52, and a second welded portion W2 is formed as a result of performing butt welding on the inner side of each of the center holes 52b. The second welded portions W2 are formed after the first welded portions W1 have been formed. Each of the second welded portions W2 is formed by, for example, overlay welding or the like performed by using a new metal material, and a welding distortion is prevented from occurring between the measurement tube 51 and the flange members 52. As a result of this, each of the second welded portions W2 does not contribute the force, applied to the flange members 52. The second welded portion W2 is formed on both ends of the measurement tube 51 in the length direction X.

As described above, the force, which pulls each of the projection portions 52c, included in the respective flange members 52, to the housing 55 side, applied by the first welded portions W1, acts in the direction indicated by an arrow F illustrated in FIG. 15, and becomes a preload, corresponding to the force that compresses the measurement tube 51, in which each of the flange members 52 is welded to the respective second welded portions W2 via the flange members 52, with respect to the length direction X of the measurement tube 51 (the tube axial direction). In this way, as a result of the preload that compresses the measurement tube 51, being applied, it is possible to reduce the rigidity (the natural vibration frequency) of the measurement tube 51, so that it is possible to decrease the resonance frequency of the measurement tube 51. As a result of this, it is possible to increase the phase difference of the torsional vibration, which is detected by the two detection units 12b that are included in the measurement element 12, so that it is possible to obtain a high signal strength without using the processing circuit 13a (arithmetic element) having a high temporal resolution. In addition, as a result of a decrease in the resonance frequency of the measurement tube 51, the amplitude of the vibration of the measurement tube 51 becomes large, so that it is possible to easily distinguish between the vibration of the measurement tube 51 and the vibration, which is generated in the pipe that is arranged outside and that is connected to the measurement tube 51, and it is thus possible to improve the measurement accuracy of the flow rate of the fluid.

As described above in the fluid measurement device 4 according to the fourth embodiment, in the Coriolis method flow meter, which is provided with the measurement tube that is the straight tube, as compared with a case of the measurement tube is a curved pipe, the rigidity of the measurement tube that is the straight tube is high, there is an inconvenience in that the phase difference at the time of detection of the torsional vibration, which is generated by the Coriolis force, is small. The phase difference to be detected is small, so that the portion, which is connected to the measurement tube, is easily affected by the vibration, which has been generated in the arranged pipe, and the SN ratio tends to be reduced. For this reason, there is a need to increase the amplitude by decreasing the rigidity of the measurement tube with respect to the torsional vibration and decreasing the resonance frequency of the measurement tube, by increasing the length of the measurement tube (by increasing the distance between the both end surfaces of the measurement tube).

In the fluid measurement device 4 according to the fourth embodiment, the resonance frequency of the measurement tube 51 can be reduced by adding the preload that compresses the measurement tube 51 in the length direction X by each of the first welded portions W1 to the measurement tube 51, so that it is possible to constitute the structure such that the length of the measurement tube 51 is set to the same length as that of the measurement tube, which is conventionally used, and the tube diameter of the measurement tube 51 is made large. As a result of this, it is possible to avoid an increase in size and weight of the entirety of the fluid measurement device 4. In addition, in the fluid measurement device 4, in a case where the tube diameter of the measurement tube 51 is made large, it is possible to decrease a pressure loss of the fluid flowing through the measurement tube 51, so that it is possible to reduce an energy loss in the energy, needed to flow the fluid in the facility in which the fluid is treated.

### Effect of the fourth embodiment

As described above, with the fluid measurement device 4 according to the fourth embodiment, it is possible to decrease the resonance frequency of the measurement tube 51 that is the straight tube by applying the preload that compresses the measurement tube 51 in the length direction X to the measurement tube 51 by each of the first welded portions W1, so that it is possible to easily detect the phase difference of the torsional vibration, which is generated in the measurement tube 51, by using the measurement element 12, without increasing the length of the measurement tube 51. In other words, the fluid measurement device 4 is able to decrease the pressure loss of the fluid in the measurement tube 51, by reducing the length of the measurement tube 51 and also increasing the tube diameter. In addition, as a result of the resonance frequency of the measurement tube 51 being reduced, the amplitude of the vibration of the measurement tube 51 increases, so that it is possible to easily distinguish between the vibration of the measurement tube 51 and the vibration, which is generated in the pipe that is arranged outside and that is connected to the measurement tube 51. As a result of this, the fluid measurement device 4 is able to improve the measurement accuracy of the flow rate of the fluid.

Furthermore, in also the fluid measurement device 4, similarly to the first to the third embodiments, by providing the housing 15, it is possible to prevent irregularities from occurring around the outer circumferential portion of the fluid measurement device 4, so that it is possible to improve the washability of the entire device.

Moreover, in the first to the fourth embodiments described above, a single piece of the measurement tube 11 (51) has been provided, but a plurality of the measurement tubes 11 (51) may be supported by the supporting portion 21 that is included in the housing 15 (55).

Some examples of combinations of the disclosed technical features will be described below.

## Claims

1. A fluid measurement device (1;2;3;4) comprising:
a measurement tube (11) through which a fluid flows;
a measurement element (12) that is provided at the measurement tube (11), and that measures the fluid;
a processing unit (13) that processes a signal, which has been measured by the measurement element (12); and
a housing (15) that includes
a supporting portion (21) that is formed in a cylindrical shape, and that supports the measurement tube (11), which is provided to pass through the supporting portion (21), and
an accommodation portion (22) that is formed in a cylindrical shape, and that accommodates the processing unit (13), and
in which the supporting portion (21) and the accommodation portion (22) are integrally formed by a metal material.

2. The fluid measurement device (2) according to claim 1, wherein
the processing unit (13) includes a detection circuit (13b) that detects the signal, and a power supply circuit (13c) that supplies electrical power to the detection circuit (13b), and
the accommodation portion (22) includes a first accommodation portion (22A) that accommodates the detection circuit (13b), and a second accommodation portion (22B) that accommodates the power supply circuit (13c).

3. The fluid measurement device (3;3A;3B;3C) according to claim 1 or 2, wherein a thermal insulation member (41;42;43), which interrupts conduction of heat of the fluid transferred from the measurement tube (11) to the processing unit (13), is provided in an interior portion of the housing (15).

4. The fluid measurement device (3:3A;3B;3C) according to any one of claims 1 to 3, wherein an electromagnetic shield member (46), which interrupts transmission of electromagnetic waves, emitted by the measurement element (12), transmitted to the processing unit (13), is provided in an interior portion of the housing (15).

5. The fluid measurement device (3;3A;3B;3C) according to claim 3, wherein the thermal insulation member (41) is arranged so as to cover a processing circuit (13a), which is included in the processing unit (13).

6. The fluid measurement device (3;3A;3B;3C) according to claim 5, wherein the thermal insulation member (41) includes holding portions (41d) that hold the processing circuit (13a) and that are disposed between the processing circuit (13a) and an inner surface of the thermal insulation member (41) with an air gap.

7. The fluid measurement device (3C) according to claim 5, wherein the thermal insulation member (43) is filled in an interior portion of the accommodation portion (22).

8. The fluid measurement device (3A) according to claim 3, wherein the thermal insulation member (42) is arranged so as to cover an outer circumference of the measurement tube (11) and the measurement element (12).

9. The fluid measurement device (3B) according to claim 8, wherein the thermal insulation member (43) is filled in an interior portion of the supporting portion (21).

10. The fluid measurement device (1;2;3;4) according to any one of claims 1 to 9, further comprising
a display unit (14) that is electrically connected to the processing unit (13), and that displays a measurement result of measurement, which is obtained by the measurement element (12), wherein
the accommodation portion (22) includes an opening (24;24A;24B) for accommodating the processing unit (13), and
the display unit (14) is provided so as to close the opening (24;24A).

11. The fluid measurement device(1; 1A;1B;1C;1D;2) according to any one of claims 1 to 9, wherein
the accommodation portion (22) includes an opening (24;24B) for accommodating the processing unit (13),
a lid member (28;29;30;31) is provided so as to close the opening (24;24B), and
the lid member (28;29;30;31) is detachably provided at the opening (24;24B).

12. The fluid measurement device (1C) according to claim 11, wherein
an attachment member (32), on which a threaded portion (32a) is formed and to which the lid member (30) is detachably attached, is provided at the opening (24), and
the attachment member (32) includes holding portions (32b) that hold a processing circuit (13a), which is included in the processing unit (13).

13. The fluid measurement device (1B; 1D) according to claim 11, wherein
the lid member (29;31) includes a cylindrical portion (29a;31a) that is provided along an outer circumference of the accommodation portion (22), and
a threaded portion (22a), to which the cylindrical portion (29a;31a) of the lid member (29;31) is detachably attached, is formed on the outer circumferential surface of the accommodation portion (22).

14. The fluid measurement device (1D) according to any one of claims 1 to 13, wherein a battery (35), which supplies electrical power to the processing unit (13) and the measurement element (12), is accommodated in the accommodation portion (22).

15. The fluid measurement device (1D) according to any one of claims 1 to 14, wherein a communication unit (36), which performs wireless communication with an outside of the housing (15), is accommodated in the accommodation portion (22).
